# EUROPÄISCHE PATENTSCHRIFT

(11) **EP 3 947 911 B1**
(45) Veröffentlichungstag und Bekanntmachung des Hinweises auf die Patenterteilung: **27.12.2023**
(21) Anmeldenummer: 20711605.4
(22) Anmeldetag: 20.03.2020
(51) Int. Cl.: E21C 35/24, E02F 3/26, G05D 1/02, E02F 9/26, E02F 7/02, E02F 9/20

(54) **VERFAHREN UND EINRICHTUNG ZUM AUTOMATISIERBAREN BETRIEB EINER MATERIALGEWINNUNGSANLAGE AN DER ABBAUFRONT EINER MATERIALGEWINNUNGSSTÄTTE**
METHOD AND DEVICE FOR THE AUTOMATABLE OPERATION OF A MATERIAL EXTRACTION PLANT AT THE FACE OF A MATERIAL EXTRACTION SITE
PROCÉDÉ ET DISPOSITIF POUR LE FONCTIONNEMENT AUTOMATISABLE D'UNE INSTALLATION DE RÉCUPÉRATION DE MATÉRIAUX SUR LE FRONT D'EXPLOITATION D'UN SITE DE RÉCUPÉRATION DE MATÉRIAUX

(30) Priorität: 03.04.2019 BE 201905211
(43) Veröffentlichungstag der Anmeldung: 09.02.2022
(73) Patentinhaber: FLSmidth A/S, 2500 Valby (DK)
(72) Erfinder: NARO, Daniele, 45899 Gelsenkirchen (DE); WALTHER, Julian, 45147 Essen (DE); GENIUS, Wolfgang, 45239 Essen (DE)
(86) Internationale Anmeldenummer: PCT/EP2020/057748
(87) Internationale Veröffentlichungsnummer: WO 2020/200835

(56) Entgegenhaltungen:
- DE-U1- 29 715 552
- US-A- 6 108 949
- US-B1- 6 363 632

## Beschreibung

Die Erfindung bezieht sich auf ein Verfahren zum Betreiben einer Materialgewinnungsanlage insbesondere an der Abbaufront einer Materialgewinnungsstätte gemäß dem Oberbegriff des Anspruchs 1. Gegenstand der vorliegenden Erfindung ist auch eine Einrichtung, mittels derer das erfindungsgemäße Verfahren durchführbar ist.

### Stand der Technik

Für mobile Arbeits- bzw. Baumaschinen, z.B. Bagger, existieren heutzutage visuelle Anzeigesysteme, die in der Fahrerkabine installiert sind und den Bediener bei seinen planungsgemäßen Arbeiten unterstützen, indem sie z.B. die momentane Position und Orientierung der Maschine anzeigen. Zudem wird insbesondere bei Baggern die Stellung eines Arbeitsarms, d.h. die Koordinaten eines entsprechenden Tool Center Points (TCP) des Arbeitsarms sowie die Stellung eines Werkzeugs angezeigt. Die meisten dieser Anzeigesysteme können durch Kombination mit einem Satellitennavigationssystem auch die globale Position der Maschine anzeigen.

Aus DE 696 25 058 T2 gehen ein System und ein Verfahren zur Erfassung geologischer Daten und Positionsdaten für die Steuerung eines Baggers zu Erdbauarbeiten auf der Grundlage der so erfassten Daten hervor. Dabei werden ein geologisches Abbildungssystem und ein geografisches Positionierungssystem für die Erstuntersuchung einer festgelegten Aushubstelle oder -strecke verwendet. Die erfassten Daten werden von einem Steuergerät verwendet, um die Baggerleistung zu optimieren. Das Abbildungssystem umfasst ein Bodendurchdringungs-Radar, um eine dreidimensionale Abbildung der Untergrundgeologie zu ermöglichen. Die so gewonnenen geologischen Abbildungsdaten werden mit historischen Bagger-Leistungsdaten korreliert, um die die Untergrundgeologie strukturell zu prüfen. Das GPS-Daten verarbeitende Positionierungssystem umfasst einen mobilen, am Bagger montierten Transponder und eine Vielzahl bodengestützter Transponder, um eine genaue geografische Abbildung einer Aushubstelle zu erhalten. Dadurch wird die Lenkbarkeit und Aushubleistung des Baggers verbessert, wobei der Baggerführer nur in geringem Umfang eingreifen muss. Bagger mit Systemen zur Erfassung der Geometrie von aufzunehmendem Material und/oder gegebenenfalls von Halden für abzusetzendes Material sind zusammen mit entsprechend automatisierten Steuerungen ebenfalls aus US 6 108 949 A, DE 297 15 552 U1 sowie US 6 363 632 B1 bekannt.

Aus DE 11 2006 000 821 T5 gehen ferner ein Verfahren zur Steuerung einer im Bergbau, Bau, Ackerbau oder Transportwesen einsetzbaren Arbeitsmaschine hervor. Die Arbeitsmaschine weist dabei ein Motorsteuersystem auf, mittels dessen Motorsteuerfunktionen basierend auf mathematischen Modellen ausgeführt werden. Das Motorsteuersystem umfasst einen Prozessor, ein Speichermodul, eine Datenbank, eine I/O-Schnittstelle bzw. Eingabe/Ausgabe-Schnittstellte und eine Netzwerkschnittstellte.

Aus DE 10 2014 221 803 A1 geht zudem ein Verfahren zum Bestimmen einer momentan vorliegenden Fahrsituation eines Fahrzeugs hervor, in dem auf einem vorgegebenen Fahrzeugumfeld basierende Umfelddaten erfasst werden, Merkmale aus den Umfelddaten mittels einer Mustererkennung extrahiert werden, eine Klassifikation der momentan vorliegenden Fahrsituation basierend auf den mittels der Mustererkennung extrahierten Merkmalen durchgeführt wird und das Ergebnis der Klassifikation bereitgestellt wird. Das Verfahren führt auf einem vorhandenen Umfeldmodell beruhend eine Situationsklassifikation durch. Die Klassifikation erfolgt durch Szenenkategorisierung aus Bildern, wobei ein "Deep Learning"-Verfahren angewendet wird. Hierbei wird, basierend auf Sensordaten, ein Belegungsbild des Umfeldes ermittelt.

Ferner geht aus DE 10 2009 024 066 A1 ein Verfahren zur Situationserkennung bzw. Klassifizierung von bildtechnisch überwachten Szenen hervor. Die Situationserkennung dient zur Verkehrsüberwachung oder zur Überwachung von Produktionsprozessen in Fabrikanlagen, wobei auch die automatisierte Erkennung komplexer dynamischer Situationen ermöglicht wird. Dabei werden Bildpixel einer Bildfolge von Bildern zu Bildsegmenten zusammengefasst und optische Flüsse für mehrere Bildsegmente berechnet. Eine Klassifizierung der Bildfolge in eine Situationsklasse erfolgt in Abhängigkeit von einem zeitlichen Verlauf der berechneten optischen Flüsse. Die Klassifizierung erfolgt z.B. anhand eines "Hidden-Markov"-Modells, bei dem zur Situationserkennung Übergangswahrscheinlichkeiten von einem Zustand zum nächsten in einer Abfolge von Zuständen betrachtet werden.

### Offenbarung der Erfindung

Der der Erfindung zugrunde liegende Gedanke kann darin gesehen werden, einen möglichst automatisierten Betrieb einer aus wenigstens einem Abbau- bzw. Abraumbagger und wenigstens einer Fördermaschine bzw. wenigstens einem Fördergerät bestehenden Materialgewinnungsanlage bzw. einen entsprechenden autonomen Betrieb von in einer solchen Anlage vorliegenden Arbeits-, Gewinnungs- und Fördermaschinen bzw. von dort eingesetzten Hilfsgeräten zu ermöglichen. Dadurch soll zudem eine entsprechend automatisierte Abbau-, Abraum- und Bahnplanung ermöglicht werden.

Es ist hierzu anzumerken, dass es sich bei dem Fördergerät auch um ein an bzw. in dem Abraumbagger integriertes Fördergerät handeln kann. So kann der Abbaubagger mit integrierter Förderbrücke ausgestattet sein. Auch kann als Fördermaschine eine mobile Brecheranlage vorgesehen sein, welche das vom Abbaubagger gelieferte Material bricht und danach an eine Förderbrücke bzw. ein Förderband übergibt.

Das erfindungsgemäß vorgeschlagene Verfahren beruht auf einer modellbasierten Echtzeit-Simulation eines hier betroffenen, bevorzugt an einer Abbau-/ Abbruchkante bzw. Abbaufront einer Materialgewinnungsstätte erfolgenden Materialgewinnungsprozesses einer hier betroffenen Materialgewinnungsanlage. Die modellbasierte Simulation erfolgt dabei anhand von ebenfalls in Echtzeit an für die Durchführung des Materialgewinnungsprozesses relevanten Anlagenteilen mittels einer Sensorik erfassten Sensordaten. Anhand der in Echtzeit vorliegenden Simulationsergebnisse erfolgt ein möglichst automatisierter Betrieb der Materialgewinnungsanlage, insbesondere im Bereich der Abbaufront.

Es ist hervorzuheben, dass dabei die sensorisch ermittelten und modellbasiert abgeleiteten Daten für die Steuerung der Gewinnungsgeräte an der Abbaufront gemeinsam in Echtzeit verarbeitet werden.

Zur Ermöglichung eines automatisierten Betriebs wenigstens eines Gewinnungsgerätes der Materialgewinnungsanlage ist es erforderlich, die gemäß dem Stand der Technik durch einen oder mehrere Operateure durchgeführten sensorischen und aktorischen Fähigkeiten bzw. Tätigkeiten durch eine genannte Sensorik zu ersetzen, wobei die sensorisch erfassten Daten so verarbeitet werden müssen, dass entsprechende Steuersignale für den Betrieb eines jeweiligen Gewinnungsgerätes abgeleitet werden können und so ein sicherer und zuverlässiger Betrieb an der Abbaufront ermöglicht wird.

Dabei kann gemäß einem Aspekt vorgesehen sein, dass die in der genannten Weise automatisiert abgeleiteten Eingriffe in den Betrieb der Anlage auch unter Berücksichtigung von produktionsorientierten Optimierungszielen erfolgen können.

Gemäß einem weiteren Aspekt wird mittels einer genannten Sensorik wenigstens eine oder eine Kombination der folgenden Größen erfasst bzw. überwacht:
- Erfassung der aktuellen Abbaugeometrie (Ist-Wert) der Abbaufront, um diese mit einem in Echtzeit simulierten Soll-Wert zu vergleichen;
- Erfassung und Überwachung des Böschungsverhaltens an der Abbaufront;
- Erfassung und Erkennung von Störkörpern in dem an der Abbaufront abzubauenden Material, z.B. Findlinge, Wasserrohre, oder dergleichen;
- Erfassung und Erkennung von Zwischenmitteln oder unterschiedlichen Materialien, z.B. zur Unterscheidung von Wertmineral gegenüber reinem Abraum.

Mittels der so erfassten Daten werden gemäß einem weiteren Aspekt in Echtzeit (automatisch) verarbeitet, um die Einstellung wenigstens eines oder einer Kombination der folgenden Betriebsparameter automatisch vorzunehmen:
- Die Positionierung des jeweiligen Gewinnungsgerätes in Bezug auf die Abbaufront sowie in Bezug auf die mit dem Gewinnungsgerät zusammenarbeitenden Fördergeräte;
- das Triggern von Prozesssequenzen sowie das Festlegen von Prozessgeschwindigkeiten, z.B. bezüglich eines Schwenkbetriebs, Fahrbetriebs, Schneidebetriebs, Förderbetriebs, Hebebetriebs und/oder Absenkbetriebs eines jeweiligen Gewinnungsgerätes;
- die Festlegung der Schnitttiefe eines Schneidwerkzeugs eines jeweiligen Gewinnungsgerätes an dem Material der Abbaufront;
- die Bahnplanung eines jeweiligen Gewinnungsgerätes für den Abbaubetrieb, z.B. das Verfahren des Gewinnungsgerätes relativ zur Abbaufront.

Die genannten möglichen Eingriffe in die Betriebsparameter bzw. den entsprechenden Abbauprozess können gemäß einem weiteren Aspekt entweder deterministisch, z.B. steuerungs- oder regelungsbasiert erfolgen, oder (stochastisch) selbstlernend, z.B. mittels eines künstlichen neuronalen Netzwerk (KNN). So kann das KNN z.B. auf der Grundlage eines Geräte- bzw. Maschinenverhaltens in Bezug auf eine aktuell durch das Gewinnungsgerät bearbeitete Abbaukante (Böschung) hin trainiert werden.

Das erfindungsgemäß vorgeschlagene Verfahren ermöglicht somit eine echtzeitbasierte und kontinuierlich ablaufende Verfahrensoptimierung im Zusammenhang mit dem bergmännischen Abbau an einer hier betroffenen Abbaufront in einem Blockbetrieb. Auf der Grundlage der sensorisch in Echtzeit gewonnenen Daten wird dabei ein Simulationsmodell derart angereichert, dass das Verfahren sich den in der Realität vorliegenden Gegebenheiten einem Optimum annähert.

Es ist dabei anzumerken, dass der Begriff "modellbasiert" sich insbesondere darauf bezieht, dass der Steueralgorithmus für ein jeweiliges Gewinnungsgerät kontinuierlich auf Basis eines genannten, virtuellen Modells für den Abbauprozess optimiert wird. Je mehr Daten somit sensorisch erfasst werden, umso detaillierter kann das virtuelle Modell berechnet werden und desto näher befindet sich der real ergebende Abbauprozess an seinem Optimum.

Diese Optimierungsaufgabe wird zudem modellbasiert auf Basis eines internen Prozess-Know-hows und einer virtuell möglichen Vorausschau auf diverse Abbauszenarien gelöst. So kann der Abbauprozess, nach einer angenommenen, sensorischen Erfassung eines Findlings, in Echtzeit so angepasst werden, dass der Abbau im Bereich des Findlings ausgespart wird.

Darüber hinaus lassen sich auch die Optimierungskriterien (übergeordnet) festlegen, z.B. hinsichtlich eines möglichst minimalen Energiebedarfs, oder hinsichtlich eines maximalen Abraumergebnisses bzw. -outputs. Alternativ oder zusätzlich können die Optimierungskriterien hinsichtlich eines minimalen Verschleißes von Anlagenteilen oder -geräten oder auch als z.B. kundenspezifisches Profil mit einer gewichteten Kombination genannter, einzelner Optimierungsziele festgelegt werden.

Bei dem vorgeschlagenen Verfahren kann gemäß einem weiteren Aspekt zudem eine auf den vorliegenden Sensordaten beruhende Hinderniserkennung durchgeführt werden. Dabei kann ein Hindernis geräteimmanent, d.h. durch mögliche Kollision von Gerätebestandteilen, anlagenimmanent, d.h. durch mögliche Kollision zwischen Einzelgeräten, oder gegenüber der Umgebung bestehen. Die Erfassung eines Hindernisses kann modellbasiert, d.h. indirekt abgeleitet werden oder direkt sensorisch erfolgen und dabei mittels einer geeigneten Nachbearbeitung ("post processing") der erfassten Sensordaten spezifiziert werden.

Im Gegensatz dazu ist bei dem im Stand der Technik bekannten manuellen Betrieb der Arbeitsmaschinen und entsprechenden Abraumanlagen im Tagebau das Einschätzungsvermögen und die Überwachung dem jeweiligen Geräteführer überlassen, diese Aspekte im Sinne einer Kollisionsvorbeugung bzw. -vermeidung bei der Steuerung der Geräte einzubeziehen.

So kann gemäß einem weiteren Aspekt bei erkannter, drohender Kollision z.B. des Gewinnungsgerätes oder Abbauwerkzeuges ein die Kollision verhinderndes Ausweichmanöver der jeweiligen Arbeitsmaschine bzw. einer Arbeitsausrüstung der Arbeitsmaschine automatisch durchgeführt werden, z.B. ein unbedingter Stopp der Gerätebewegung oder eine geeignete Änderung der Bewegungsrichtung, oder eine geeignete Umstellung von Betriebsparametern der Arbeitsmaschine oder an der Szene beteiligter weiterer Maschinen oder Geräte.

Es ist ferner hervorzuheben, dass die vorliegende Erfindung auch bei einer Materialgewinnungsanlage anwendbar bzw. einsetzbar ist, bei welcher der Materialtransport in beiden Transportrichtungen möglich ist. So kann anstelle des Abbaugerätes ein "Absetzgerät" zum Absetzen bzw. zum Abwerfen von schüttfähigem Material an der Abbaufront vorgesehen sein.

Gemäß einem weiteren Aspekt des vorgeschlagenen Verfahrens kann vorgesehen sein, dass anhand der erfassten Sensordaten eine Klassifizierung in eine Situationsklasse durchgeführt wird. Auf einer bereits erfolgten Klassifizierung beruhend können aktuell erfasste Sensordaten mittels der entsprechend klassifizierten Situationsklassen klassiert werden und anhand des Klassierungsergebnisses die modellbasierte Simulation berechnet bzw. durchgeführt werden.

Es ist hierbei anzumerken, dass der genannte Verfahrensschritt der "Klassierung" mittels der Situationsklassen in dem vorliegenden Zusammenhang sowohl den Bereich des "Machine Learning" mittels künstlicher Intelligenz, z.B. mittels eines künstlichen neuronalen Netzwerks, als auch einen generisch angelegten Entscheidungsfindungs- und Optimierungsalgorithmus umfassen kann, bei dem anhand von sensorisch erfassten Geometriedaten der Abbaufront sowie der an dem Abbauprozess beteiligten Anlagenteilen bzw. Geräten, Materialeigenschaften des an der Abbaufront vorliegenden, abzubauenden Materials, Untergrunddaten im Bereich der Abbaufront (z.B. Wassergehalt), sowie ggf. weitere Topografiedaten und/oder Umgebungsdaten im Bereich der Abbaufront Entscheidungen für den weiteren Betrieb von hier betroffenen Geräten bzw. Maschinen getroffen werden.

Es ist ferner anzumerken, dass auch bestehende, bereits automatisierte Materialgewinnungsanlagen mittels des erfindungsgemäß vorgeschlagenen Verfahrens nachträglich verbessert werden können, wobei z.B. zusätzlich eine genannte, modellbasierte Prozesssimulation durchgeführt werden kann.

Die erfindungsgemäß ebenfalls vorgeschlagene Einrichtung ist eingerichtet, eine hier betroffene Materialgewinnungsanlage, insbesondere die räumliche Bewegung und/oder räumliche Ausrichtung eines an der Abbaufront betriebenen Gewinnungsgerätes bzw. Gewinnungswerkzeuges während des Abbau- bzw. Abraumprozesses mittels des vorgeschlagenen Verfahrens automatisiert zu steuern.

Gemäß einem Aspekt der vorgeschlagenen Einrichtung werden wenigstens die an der Abbaufront betriebenen Arbeitsmaschinen und weiteren Geräte mit Sensoren zur Positions-und Umfelderfassung ausgestattet. Diese Sensorik kann direkt mittels einer Radarantenne, Laser-basiert ("LiDar"), direkt mittels einer optischen Kamera und/oder IR-Kamera, oder mittels elektromagnetischer Sensorik (Transponder) realisiert werden.

Auch ein Einsatz weiterer Sensorik auf Basis alternativer physikalischer Effekte ist denkbar, soweit dieser Einsatz die Anreicherung eines Umfeld- und Situationsmodells mit Meta-Daten zusätzlich anreichern kann. Hierbei ist hervorzuheben, dass als Sensorik grundsätzlich jegliche im Stand der Technik bekannte Sensorik einsetzbar ist. Alternativ oder zusätzlich kann auch eine dezentral arbeitende Sensorik, z.B. mit einem drohnenbasierten Überflug einer hier betroffenen Materialgewinnungsanlage erfasste Kartierungsdaten, Berücksichtigung finden.

Die relevanten Positionen der beteiligten Maschinen bzw. Gewinnungsgeräte können auch modellbasiert bzw. durch modellbasierte Simulation anhand geräteimmanenter Positions-und Betriebsdaten (GPS, Winkelencoder, externe optische Erkennung durch Bilderkennung) ermittelt werden.

Es ist anzumerken, dass die vollständige Automatisierung des Betriebs einer Materialgewinnungsanlage an der Abbaufront eine möglichst lückenlose und insbesondere echtzeitbasierte Umfeld- bzw. Umgebungserfassung erfordert.

Gemäß einem weiteren Aspekt der vorgeschlagenen Einrichtung ist eine Sensorik zur Erzeugung genannter Sensordaten, eine Datenverarbeitungseinheit zur Durchführung einer genannten Klassifizierung bzw. Klassierung zur Erzeugung von Betriebsdaten vorgesehen, wobei mittels der so erzeugten Betriebsdaten das wenigstens eine Gewinnungsgerät durch eine Steuerung bzw. Steuereinheit entsprechend angesteuert wird.

Die Erfindung kann insbesondere in einer im Übertagebau oder Untertagebau erfolgenden Erzgewinnung, Braunkohle- oder Steinkohlegewinnung, oder Steingewinnung, oder Gewinnung von für die Zementherstellung erforderlichen, schüttfähigen Materialien einsetzbaren Materialgewinnungsanlage zur Anwendung kommen.

Das erfindungsgemäße Verfahren kann beispielsweise mit Hilfe eines Computerprogramms realisiert werden, insbesondere wenn es auf einem Rechengerät oder einem Steuergerät abläuft. Es ermöglicht die Implementierung des erfindungsgemäßen Verfahrens auf einem elektronischen Steuergerät, ohne an diesem bauliche Veränderungen vornehmen zu müssen. Hierzu kann etwa ein maschinenlesbarer Datenträger vorgesehen sein, auf welchem das Computerprogramm gespeichert ist. Durch Aufspielen des Computerprogramms auf eine Einrichtung bzw. ein entsprechendes elektronisches Steuergerät wird die erfindungsgemäße Einrichtung erhalten, welches eingerichtet ist, um eine hier betroffene Materialgewinnungsanlage an einer Abbaufront mittels des erfindungsgemäßen Verfahrens automatisiert zu betreiben.

Weitere Vorteile und Ausgestaltungen der Erfindung ergeben sich aus der Beschreibung und den beiliegenden Zeichnungen. In den Zeichnungen sind übereinstimmende oder funktional gleichwirkende Elemente bzw. Merkmale mit übereinstimmenden Bezugszeichen versehen.

Es versteht sich, dass die voranstehend genannten und die nachstehend noch zu erläuternden Merkmale nicht nur in der jeweiligen angegebenen Kombination, sondern auch in anderen Kombinationen oder in Alleinstellung verwendbar sind, ohne den Rahmen der vorliegenden Erfindung zu verlassen.

### Kurze Beschreibung der Zeichnungen

- Figur 1: zeigt eine schematische Draufsicht auf eine typische räumliche Anordnung eines Abraum- bzw. Schaufelradbaggers einer hier betroffenen Materialgewinnungsanlage, am Beispiel einer in einem Tagebau vorliegenden Abbaufront bzw. Abbaukante, zusammen mit entsprechenden Fördergeräten und mit einem im Arbeitsbereich des Schaufelradbaggers angeordneten, beispielhaften Hindernis.
- Figur 2: zeigt ein Ausführungsbeispiel des erfindungsgemäßen Verfahrens bzw. der Einrichtung anhand eines kombinierten Fluss-/Blockdiagramms.
- Figur 3: zeigt ein Ausführungsbeispiel einer erfindungsgemäßen, modellbasierten Situationsklassierung zur Ermöglichung eines vollautomatisierten Betriebs einer hier betroffenen Materialgewinnungsanlage an einer Abbaufront.
- Figur 4: zeigt ein Ausführungsbeispiel einer erfindungsgemäßen Klassifizierung einer sensorisch erfassten Betriebssituation einer hier betroffenen Materialgewinnungsanlage (vorliegend Minenanlage) anhand eines Zustandsdiagramms.
- Figur 5: zeigt ein Ausführungsbeispiel einer modellbasierten Simulation von möglichen Bewegungsabläufen eines in Fig. 1 gezeigten Schaufelradbaggers anhand derer eine Vorhersage der Bewegung des Baggers bzw. seines Abbauwerkzeuges an der Abbaufront ermöglicht wird.
- Figur 6: zeigt eine Abbaukante bzw. Abbaufront am Beispiel eines Tagebau-Erzlagers zur weiteren Illustration des erfindungsgemäßen Verfahrens und der Einrichtung.

### Beschreibung von Ausführungsbeispielen

Das erfindungsgemäße Verfahren zum automatisierten Betrieb einer hier betroffenen Materialgewinnungsanlage an einer Abbaukante bzw. Abbaufront 130 einer Materialgewinnungsstätte sowie eine entsprechende Steuereinrichtung werden nachfolgend am Ausführungsbeispiel der Erzgewinnung an einer Minenanlage mittels eines Schaufelradbaggers beschrieben. Das Verfahren und die Einrichtung können allerdings auch bei anderweitig eingesetzten Abraumlagen, z.B. zur Stein-/Natursteingewinnung, zur Gewinnung von Braunkohle, oder zur Gewinnung von Rohstoffen für die Zementherstellung, entsprechend eingesetzt werden.

Eine hier betroffene Anlage weist im Bereich der Abbaufront 130 eine Abbaumaschine, in dem vorliegenden ersten Ausführungsbeispiel einen Schaufelradbagger, auf. Auf der der Abbaufront 130 im wesentlichen abgewandten Seite sind zusätzlich mobile Fördergeräte zum Abtransportieren von an der Abbaufront abgebautem Material, z.B. ein oder mehrere Förderbrückenwagen oder Radlader sowie ggf. weitere mobile Geräte, z.B. Beladewagen oder Bandschleifenwagen zur Ableitung des Abraums von einem Förderband, angeordnet. In dem näheren Umfeld des Schaufelradbaggers kann zusätzlich eine hier nicht dargestellte mobile Brecheranlage zum Zerkleinern von schüttfähigem Abraum angeordnet sein.

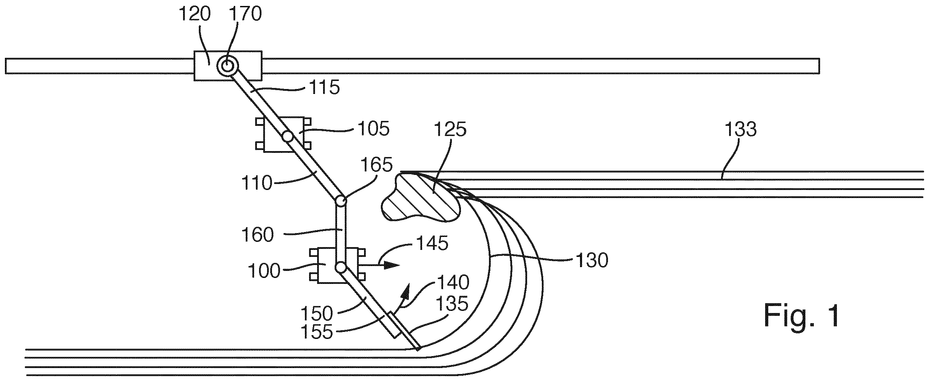

Die in Figur 1 gezeigte Geräteanordnung im Bereich der Abbaufront 130 des Erzlagers umfasst in dem vorliegenden Ausführungsbeispiel einen genannten Schaufelradbagger ("excavator") 100, einen Förderbrückenwagen ("beit wagon") 105 mit einem Zuladeausleger ("receiving boom") 110 und einem Entladeausleger ("discharge boom") 115, sowie einem in dem vorliegenden Ausführungsbeispiel auf einer Fahrschiene angeordneten Schüttgutwagen ("hopper car") 120. Zusätzlich ist schematisch ein im Arbeitsbereich des Schaufelradbaggers 100 nahe der Abbaufront 130 angeordnetes, vorliegend beispielhaft aus einer Baumgruppe gebildetes Hindernis 125 dargestellt. Es ist hierbei anzumerken, dass als Hindernis bzw. Hindernisse insbesondere auch zumindest vorübergehend im Bereich der Abbaufront 130 befindliche mobile Geräte, Fahrzeuge oder auch Personen in Betracht kommen können.

Der Schaufelradbagger 100 weist in an sich bekannter Weise ein in der horizontalen Bodenebene (= Zeichenebene) sowie meist auch senkrecht dazu drehbar gelagertes Schaufelrad 135 auf. Durch eine Drehbewegung des Schaufelrads 135 insbesondere in der Bodenebene entsprechend einer ersten Pfeilrichtung 140 und einen sukzessiven Vorschub des Schaufelrades 135, bzw. entsprechend des Abraumbaggers 100, in einer zweiten Pfeilrichtung 145 an der Abbaufront 130 wird schüttfähiges Material, vorliegend erzhaltiges Gestein bzw. Mineral, abgebaut.

Das von dem Schaufelradbagger 100 abgebaute Material bzw. Schüttgut wird von einem das Schaufelrad 135 tragenden Schaufelradausleger 150 über ein erstes Förderband 155 und über ein mit dem ersten Förderband 155 zusammenwirkendes, an einem Entladeausleger des Schaufelradbaggers 100 angeordnetes zweites Förderband 160 an einem ersten Übergabepunkt 165 an den Förderbrückenwagen 105 übergeben. Der erste Übergabepunkt 165 muss während des Abbau- bzw. Abraumbetriebs des Schaufelradbaggers 100, d.h. insbesondere bei seinem Vorschub in der zweiten Pfeilrichtung 145 bei einer gleichzeitigen Rotationsbewegung des Schaufelrads 135, fortwährend mit dem Zuladeausleger 110 des Förderbrückenwagens 105 in räumliche Übereinstimmung gebracht werden, damit bei der Übergabe kein Schüttgut von dem zweiten Förderband 160 und/oder dem Zuladeausleger 110 herunterfällt. Daher besteht hier ein nicht unerhebliches Kollisionsrisiko des Schaufelradbaggers 100 und des Förderbrückenwagens 105 bzw. von deren Auslegern 110 mit umgebenden Maschinen, Geräten, Personen oder dem beispielhaft gezeigten Hindernis 125.

Es ist anzumerken, dass der Schaufelradbagger 100, gemäß einer alternativen Geräteanordnung, den Schüttgutwagen 120 mittels eines an dem Schaufelradbagger 100 angeordneten Entladeauslegers auch direkt mit Schüttgut beschicken kann, wobei dann kein Förderbrückenwagen 105 dazwischen angeordnet sein muss.

Der möglichst vollautomatisierte Betrieb der in Figur 1 gezeigten Materialgewinnungsanlage, insbesondere im Bereich der Abbaufront 130, erfolgt anhand des erfindungsgemäßen Verfahrens und der Einrichtung mittels einer geeigneten, ortsauflösenden und situativ erfassenden Sensorik sowie einer Datenverarbeitung zur modellbasierten Echtzeit-Simulation des hier betroffenen, an der Abbaufront 130 des Erzlagers erfolgenden Materialgewinnungsprozesses.

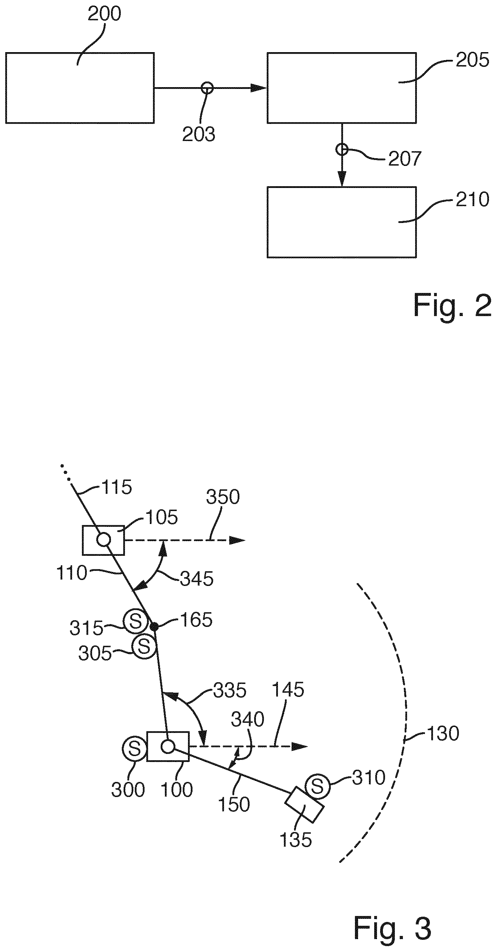

Als Sensorik werden in dem vorliegenden ersten Ausführungsbeispiel in der Figur 3 gezeigte GPS-Sensoren 300 - 315 angenommen. Es können alternativ oder zusätzlich auch elektromagnetisch bzw. optisch erfassende Sensoren, z.B. lasergestützte "LiDar"-Systeme, Radarsensoren, insbesondere ein sogenanntes "Ground Penetrating"-Radarsystem, Transponder, optische (visuelle) und/oder IR-Kameras oder Mikrowellensensoren zum Einsatz kommen.

Die Betriebssicherheit und Arbeitssicherheit sowie die technische Zuverlässigkeit des hierin beschriebenen Verfahrens bzw. der Einrichtung zum automatisierten Betrieb einer hier betroffenen Materialgewinnungsanlage an einer bzw. im Bereich einer in Figur 1 gezeigten Abbaufront 130 werden gemäß einem zweiten Ausführungsbeispiel durch ein lernfähiges Verfahren, z.B. mittels eines künstlichen neuronalen Netzes (KNN), zusätzlich verbessert. Die kognitiv lernfähige, d.h. stochastisch bzw. probabilistisch angewendete KNN kann dabei zusätzlich zu der genannten, modellbasierten Simulation oder alternativ zu der rein deterministischen Modellberechnung eingesetzt werden.

Gemäß dem zweiten Ausführungsbeispiel werden als Eingangsgrößen des KNN die folgenden, mittels einer genannten Sensorik 300 - 315 erfassten Daten insbesondere zu geometrischen und physikalischen (z.B. boden- bzw. materialstrukturellen) Eigenschaften der Abbaufront (bzw. Abbaukante) 130 und Umgebungseigenschaften bezüglich des Schaufelradbaggers 100 an der Abbaufront 130 berücksichtigt. Zusätzlich werden in dem vorliegenden Beispiel ebenfalls sensorisch erfasste Betriebsgrößen der Materialgewinnungsanlage berücksichtigt.
- Die z.B. (laser-)optisch oder radarttechnisch erfasste räumliche Geometrie, Topografie bzw. Kontur der Abbaukante 130;
- die z.B. mittels eines Mikrowellensensors erfassten (internen) Materialeigenschaften der Abbaukante 130, z.B. der Wassergehalt und mögliche Trennschichten;
- z.B. (laser-)optisch oder radarttechnisch erfasste mögliche Hindernisse bzw. Störkörper, z.B. den Abbauprozess störende Findlinge, Bauten/Gebäude oder Vegetation;
- die z.B. mittels eines GPS-Sensors ermittelte, aktuelle Position des Schaufelradbaggers 100;
- der z.B. mittels wenigstens zweier GPS-Sensoren ermittelte, aktuelle Drehwinkel des Entladeauslegers 160 des Schaufelradbaggers 100;
- die wiederum z.B. mittels eines GPS-Sensors ermittelte, aktuelle Position des Förderbrückenwagens 105;
- der wiederum z.B. mittels wenigstens zweier GPS-Sensoren ermittelte, aktuelle Drehwinkel des Förderbrückenwagens 105.

Auf der Grundlage der so erfassten Daten wird eine insbesondere situative Klassifizierung oder Klassierung einer vorliegenden Betriebssituation vorgenommen. Es ist hierbei anzumerken, dass bei den vier zuletzt genannten Daten bevorzugt sowohl relative als auch absolute Positions- und/oder Winkeldaten erfasst und ausgewertet werden.

Bei der Klassifizierung einer aktuell vorliegenden Abbau- bzw. Abraumsituation an der Abbaufront sowie ggf. zusätzlich des Anlagenzustandes des Schaufelradbaggers sowie der im Bereich bzw. Umgebungsbereich des Baggers bzw. der Abbaufront angeordnete Förder- und Hilfsgeräte auf der Grundlage der erfassten Daten bzw. entsprechenden Betriebsgrößen. Dabei können mögliche Kollisionen von Anlagenteilen untereinander sowie von Anlagenteilen mit nicht zur Anlage gehörigen Objekten berücksichtigt werden.

Bei der Klassifizierung der Betriebssituation der Anlage im Bereich der Abbaufront 130 werden die sensorisch erfassten Größen, d.h. z.B. die genaue geometrische Kontur der Abbaukante der Abbaufront, der die Festigkeit des abzubauenden Materials bestimmende Wassergehalt des dortigen Materials bzw. mögliche Trennschichten sowie an bzw. im Bereich der Abbaufront angeordnete Objekte (z.B. Findlinge, Bauten oder Vegetation), und ggf. zusätzlich die genannten Positions- und/oder Winkeldaten der an der Abbaufront beteiligten Anlagenteile bzw. Geräte, analysiert und klassifiziert bzw. zu Klassen zusammengefasst. Anhand des Klassifizierungsergebnisses wird ein entsprechender Betriebs- bzw. Abbauplan erstellt, wobei ggf. zusätzlich eine erkannte, potenziell bevorstehende kollisionskritische Betriebssituation berücksichtigt wird. Die Klassifizierung kann z.B. anhand von an sich bekannten Clustermethoden, z.B. anhand des bekannten "k-mean"-Ansatzes, erfolgen. Eine jeweils so gebildete Klasse beschreibt dann eine spezifische Betriebssituation der Anlage.

Bei der Klassifizierung der Betriebssituation anhand von sensorisch erfassten Umfeld- bzw. Umgebungsdaten kann zusätzlich eine lokale Kartierung, z.B. mittels optischer Triangulation, erfolgen. Auf den Ergebnissen dieser Umgebungserfassung basierend wird ein statischer Abbauplan (sog. "Minenplan") erstellt, welcher systematisch und prozessimmanent keine Kollisionen (mehr) aufweist. Aufgrund der Dynamik einer solchen Planung, bedingt durch kontinuierliche Veränderungen von Randbedingungen im Betrieb der Anlage, ist es erforderlich, das Kollisionspotential fortwährend zu überwachen und ggf. weitere kollisionsverhindernde Maßnahmen durchzuführen.

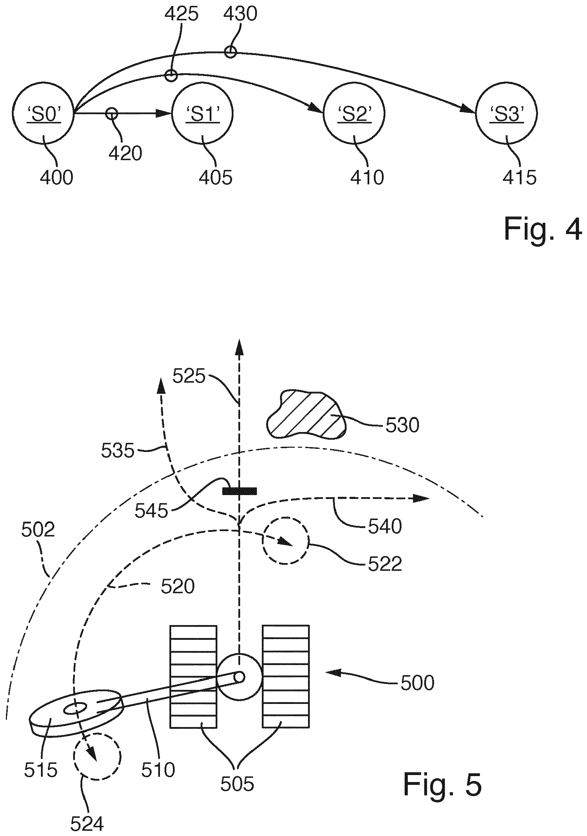

Nach der Klassifikation der Betriebssituation wird diese in einen konkreten Anlagen-und/oder Prozesszustand im Bereich der Abbaukante übergeführt. Diese Zustandsüberführung ist in der Figur 4 illustriert. Der Anlagenzustand berücksichtigt dabei, neben der aktuellen Betriebssituation, zusätzlich vorangegangene Anlagenzustände. Dadurch lässt sich die Betriebssituation über einen längeren Zeitraum auswerten. Darüber hinaus erlaubt die Zustandsüberführung eine Synchronisation zwischen verschiedenen Anlagenteilen. Die technische Implementierung der Zustandsüberführung erfolgt in dem vorliegenden Ausführungsbeispiel in an sich bekannter Weise mittels einer entsprechenden Zustandsmaschine.

Das in Figur 4 gezeigte Zustandsdiagramm geht aus von einem Ausgangszustand 400 ('S0') der Anlage bzw. des Abbauprozesses. In einem durch einen ersten Zustandsübergang 420 ('Z1') hervorgerufenen Zwischenzustand 405 (`S1 `) ergeben sich in dem vorliegenden Beispiel zwei mögliche Folgezustände 410, 415 (`S2` und `S3`). Anhand der Klassifikation einer vorliegenden Betriebssituation ergibt sich entweder anhand eines zweiten Zustandsübergangs 425 (`Z2`) der erste Folgezustand 410 (`S2`) oder anhand eines dritten Zustandsübergangs 430 (`Z3`) der zweite Folgezustand 415 (`S3`).

Es wird nun angenommen, dass einer der beiden möglichen Folgezustände 410 (`S2`), 415 ('S3') eine Kollisionssituation mit einem genannten Hindernis bzw. Störobjekt beinhaltet, z.B. der Folgezustand 415 (`S3`). Eine solche Kollisionssituation kann z.B. ein im weiteren Betrieb der Anlage wahrscheinlich bevorstehender Zusammenstoß zwischen dem in Figur 1 gezeigten Entladeausleger 160 des Schaufelradbaggers 100 und dem Zuladeausleger 110 des Förderbrückenwagens 105 sein.

Nachdem der momentane Betriebszustand der Anlage und ein wahrscheinlicher Folgezustand der Anlage mit einer möglichen Kollision in der beschriebenen Weise bestimmt worden sind, erfolgt in dem vorliegenden Ausführungsbeispiel zunächst eine Auswahl von für den vorliegenden Anlagenzustand geeigneten Steuerungs- oder Regelungsstrategien zur wirksamen Verhinderung einer solchen Kollision. Diese Auswahl kann z.B. durch die Auswahl von Sollwerten für die jeweiligen Regelungen der einzelnen Geräte, oder gemeinsam für sämtliche Geräte des Geräteverbunds der Abraumanlage, erfolgen.

Die Figur 2 zeigt ein Ausführungsbeispiel des erfindungsgemäßen Verfahrens bzw. der Einrichtung anhand eines kombinierten Block-/Flussdiagramms.

Das gezeigte Verfahren basiert in dem vorliegenden Ausführungsbeispiel zu Vereinfachungszwecken auf einer Sensorik 200 nur zur Erfassung des geometrischen Verlaufs der Abbaukante 130 und von an der Abbaufront möglicherweise befindlichen Hindernissen 125.

Die Sensorik 200 umfasst in dem vorliegenden Ausführungsbeispiel ein an dem Schaufelrad 135 des Baggers 100 angeordnetes (laseroptisches) "LiDar"System 310 (siehe Figuren 1 und 3).

Mittels der von dem LiDar-System 200 gelieferten Sensordaten 203 erfolgt eine prädiktive Planung des Abbauprozesses an der Abbaufront 130 mittels eines an sich bekannten, insbesondere echtzeitfähigen Industrie-PCs (IPC) 205. Anhand der Sensordaten 203 werden in Echtzeit für die Automatisierung des Abbauprozesses an der Abbaufront 130 geeignete Betriebs- bzw. Steuerungsdaten 207 für den Bagger 100 und zumindest die für die im näheren Umfeld des Baggers 100 befindlichen, an dem Abbauprozess beteiligten Maschinen bzw. Geräte erforderliche Steuerungsdaten erzeugt bzw. berechnet.

Auf der Grundlage der von dem IPC 205 bereitgestellten Steuerungsdaten 207 wird der gesamte, im Bereich der Abbaufront 130 befindliche Geräteverbund 100, 105 mittels einer speicherprogrammierbaren Steuerung (PLC) 210 angesteuert. Bei dieser Ansteuerung können auch mögliche Kollisionen mit genannten Hindernissen 125 durch geeignete Ausweichmanöver und/oder durch eine Abschaltung einer betroffenen Aktorik eines der beteiligten Geräte 100, 105 wirksam verhindert werden. Die Ansteuerung erfolgt dabei z.B. anhand entsprechender Fahrbefehle bzw. entsprechender Schwenkbewegungen des Schaufelrades 135 des Baggers 100 sowie der beweglichen Förderbrücke 110 des Förderbrückenwagens 105.

Das Verfahren zum automatisierten Betrieb einer hier betroffenen Anlage kann alternativ oder zusätzlich auf einer berechneten Modellsimulation eines in der Figur 1 gezeigten, im Bereich der Abbaufront 130 angeordneten Geräteverbunds 100, 105 beruhen. Die genannte Modellrechnung kann zum einen eine modellbasierte Simulation der möglichen Bewegungsabläufe (Kinematik) und damit entsprechende Vorhersage (Prädiktion) der Bewegung des Schaufelrades 135 des Baggers 100 sowie des lokalen Fördergeräteverbunds 105 umfassen.

Ein Ausführungsbeispiel einer modellbasierten Simulation ist in der Figur 5 schematisch dargestellt. In diesem Beispielszenario geht es um eine mögliche Kollision eines Schaufelradbaggers 500 mit einem im Bereich einer Abbaufront bzw. Abbaukante 502 angeordneten, in der beschriebenen Weise sensorisch erfassten Hindernis 530. Der Bagger 500 weist modellgemäß vereinfachend lediglich einen Kettenantrieb 505 sowie ein an einem Ausleger 510 angeordnetes Schaufelrad 515 auf. Die für den Abtransport von abgebautem Material erforderliche Fördertechnik ist bei dieser Vereinfachung nicht berücksichtigt, da es bei der vorliegenden Modellrechnung bevorzugt um den Materialabbau an der Abbaukante 502 geht. Das Schaufelrad 515 ist in der gezeigten Pfeilrichtung 520, ebenfalls vereinfachend, nur horizontal schwenkbar ausgebildet, um durch diesen Schwenkbetrieb an der Abbaukante 502 Material abbauen bzw. abtragen zu können.

Gemäß einer vorliegenden Betriebsplanung bzw. eines geplanten Geräteeinsatzes für den Abbaubetrieb der gezeigten Anlage erfolgt der Vorschub des Baggers 500 in der gezeigten Pfeilrichtung 525. In der gezeigten rechten Endposition 522 des Schaufelrads 515 würde es bei einer weiteren Vorschubbewegung des Baggers in der Pfeilrichtung 525 zu einem Zusammenstoß zwischen dem Schaufelrad 515 und dem sensorisch erfassten Hindernis 530 kommen. Zur wirksamen Verhinderung einer Kollision des Schaufelrads 515 mit dem Hindernis 530 ergeben sich vorliegend drei alternative Betriebs- bzw. Vorschubweisen bzw. Umgehungspfade des Baggers 500.

Gemäß einem ersten, möglichen Umgehungspfad 535 führt der Bagger 500 eine nach links ausladende Bewegung aus, wodurch das Schaufelrad 515 in seiner rechten Endposition 522 links an dem Hindernis 530 vorbeigeführt wird und damit nicht mehr mit dem Hindernis 530 kollidieren kann. Vorteilhaft an diesem Umgehungspfad 535 ist, dass keine Ausfallzeit ("downtime") der Anlage bzw. des Betriebs des Baggers 500 erforderlich ist. Er hat allerdings den Nachteil, dass es zu einem erheblichen räumlichen und zeitlichen Eingriff in den geplanten Abbauprozess kommt, wobei zudem die Abbaugeometrie an der Abbaukante 502 erheblich verändert wird und somit der Abbauprozess entsprechend angepasst werden muss.

Gemäß einem zweiten, möglichen Umgehungspfad 540 führt der Bagger 500 eine nach rechts abzweigende Bewegung aus, wodurch das Schaufelrad 515 insbesondere in seiner linken Endposition 524 rechts an dem Hindernis 530 vorbeigeführt wird und damit nicht mehr mit dem Hindernis 530 kollidieren kann. Es ist hierbei allerdings anzumerken, dass das Vorbeiführen des Baggers 500 vor dem Hindernis 530 im Ergebnis zu einer zumindest zeitweiligen Ausfallzeit ("downtime") der Anlage führt, da der Bagger 500 die Abbaukante 502 im besten Fall verzögert erreicht und erst danach den Abbaubetrieb wieder aufnehmen kann.

Gemäß einer dritten Betriebsweise 545 führt der Bagger 500 rechtzeitig vor Erreichen des Hindernisses 530 einen ,NOT-Stopp', d.h. eine genannte Ausfallzeit ("downtime") der Anlage, durch. Auch dadurch kann eine genannte Kollision mit dem Hindernis 530 wirksam verhindert werden. Gegenüber dieser dritten Alternative sind die ersten beiden Alternativen zu bevorzugen, da diese den weiteren Betrieb des Baggers bzw. der Anlage ermöglichen bzw. gewährleisten. Denn eine genannte Ausfallzeit der gesamten Anlage ist möglichst zu verhindern.

Ein mögliches Kollisionspotenzial kann durch einen Vergleich der von dem Schaufelrad während der Auslenkbewegung überschrittenen Fläche A_{Planung}, bzw. der entsprechenden Einhüllenden, mit der vom dem Hindernis 530 überdeckten Fläche A_{Hindernis} ermittelt werden. Eine Kollision wird dabei prädiziert, wenn die Bedingung "A_{Hindernis} ist eine Teil- bzw. Untermenge von A_{Planung}" erfüllt ist. Ist diese Bedingung nicht erfüllt, wird keine Kollision prädiziert.

In der Figur 3 ist die anhand der Figur 2 beschriebene, prädiktive Berechnungsmethode anhand einer beispielhaften Situationsklassierung detaillierter dargestellt.

Dabei wird die in der Figur 1 gezeigte, an der Abbaufront 130 aus einem Schaufelradbagger 100 und einem Förderbrückenwagen 105 gebildete Fördergerätekette vereinfacht dargestellt. Dabei wird das Vorhandensein einer gemäß der Fig. 2 beschriebenen Sensorik angenommen, welche in dem vorliegenden Ausführungsbeispiel ein LiDar-Messsystem 310 sowie drei GPS-Positionssensoren 300, 305, 315 aufweist. Das LiDar-Messsystem 310 ist an dem Schaufelrad 135 des Baggers 100 angeordnet, wohingegen die drei GPS-Sensoren 300, 305, 315 an dem Bagger 100 sowie an den Förderbanden des Entladeauslegers 160 des Baggers 100 und des Zuladeauslegers 110 des Förderbrückenwagens 105 angeordnet sind. Es ist anzumerken, dass aus den von den GPS-Sensoren 300, 305, 315 gelieferten Orts- bzw. Positionsdaten mittels üblicher Trigonometrie auch aktuelle Winkeldaten des gezeigten Geräteverbunds berechnet werden können. Die Winkeldaten umfassen insbesondere einen ersten Winkel 335 zwischen der Vorschubrichtung 145 des Schaufelradbaggers 100 und der Ausrichtung des Förderbandes des Entladeauslegers 160 und einen zweiten Winkel 340 zwischen der Vorschubrichtung 145 und dem Schaufelradausleger 150, sowie einen dritten Winkel 345 zwischen der Vorschubrichtung 350 des Förderbrückenwagens 105 und der Ausrichtung seines Zuladeauslegers 110 bzw. Entladeauslegers 115.

Es ist ferner anzumerken, dass die genannten Positionssensoren 300, 305, 315 auch mittels eines Kamerasystems, eines Radarsystems oder mittels eines laserbasierten Messsystems (z.B. "LiDar") sowie entsprechender Auswertung von dabei erfassten Bilddaten realisiert werden kann.

Die Prädiktion bzw. Planung des Abbauprozesses an der Abbaufront 130 erfolgt dabei durch geeignete Anpassung der Vorschubgeschwindigkeit des Schaufelradbaggers 100 in der Bewegungsrichtung 145 des Baggers 100 in Richtung der Abbaufront 130. Zudem wird die Prozessplanung so durchgeführt, dass Kollisionen mit genannten Hindernissen an der Abbaufront wirksam verhindert werden.

Das Klassifizierungsverfahren kann bekanntermaßen analytisch, numerisch, mittels eines Entscheidungsbaums, oder durch Mustererkennung z.B. mittels eines neuronalen Netzes ausgeführt werden. Mittels des Klassifikationsverfahrens erfolgt dann im vorliegenden Fall in an sich bekannter Weise eine Einteilung (Klassierung) von Betriebssituationen in Klassen mittels eines sog. "Klassifikators" bzw. eines entsprechenden Algorithmus`.

Im Gegensatz dazu werden bei einem Klassierungsverfahren Betriebssituationen in bereits existierende Klassen eingeordnet.

Bei dem Klassierungsverfahren werden genannte, an der Abbaufront gewonnene Sensordaten sowie ggf. zusätzlich gewonnene aktuelle Positions- und/oder Winkeldaten der beteiligten Gewinnungs- und Fördergeräte 100, 105, ggf. auch einschließlich des Schüttgutwagens 120, erfasst und die so gewonnenen Daten in der vorbeschriebenen Weise in eine im Vorfeld empirisch ermittelte Situationsklasse klassifiziert. Anhand des Klassifizierungsergebnisses lässt sich dann die Materialgewinnungsanlage zumindest im Bereich der Abbaufront 130 voll automatisiert betreiben.

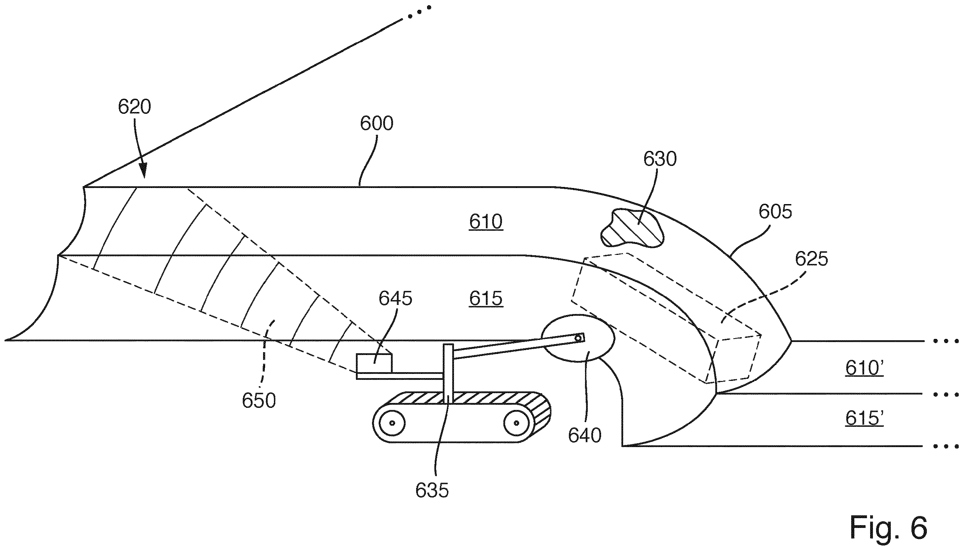

Bei der in Figur 6 in einer schematischen Seitenansicht dargestellten Abbaufront 600 würde sich ein hier nur schematisch dargestellter, ein genanntes Schaufelrad 640 aufweisender Schaufelradbagger 635 (in der Papierebene) von links nach rechts bewegen und im Bereich der gezeigten Abbaukante 605 Material abbauen. In dem vorliegenden Szenario liegen bereits zwei Abbauschichten bzw. -ebenen 610, 610` und 615, 615` vor, wobei der nicht gezeigte Bagger momentan an der oberen Schicht 615, 615` Abbauarbeiten ausführt.

An dem Bagger 635 ist in dem vorliegenden Ausführungsbeispiel eine radarbasierte Sensorik 650 angeordnet, mittels der zum einen eine Geometrieerfassung der Böschung 620 und insbesondere der Abbaukante 605 erfolgt und zum anderen mittels der an sich bekannten Technologie des "Ground Penetrating"-Radar mögliche Störkörper, Findlinge oder Trennschichten im Inneren der Abbaufront bzw. Abbaukante erfasst werden können.

Es ist anzumerken, dass die Anordnung der Sensorik an dem Bagger (sozusagen als Sensorträger) nur beispielhaft ist und die Sensorik alternativ auch mobil an einem Hilfsgerät, z.B. einer bodengebundenen Drohne oder einer Flugdrohne, angeordnet sein kann.

Die prozesstechnischen Aufgaben der Sensorik 650 betreffen die folgenden, möglichst präzise und mit einem möglichst geringen Zeitversatz zu erfassenden Daten:
- Erfassung des Ist-Zustandes der Geometrie der Abbaukante 605 als Ist-Wert, um diesen mit einem durch modellbasierte Simulation berechneten, entsprechenden Soll-Wert mit möglichst geringem Zeitversatz vergleichen zu können;
- Erfassung des Böschungsverhaltens im Bereich der Abbaufront 600, insbesondere an der Abbaukante 605;
- Erfassung von an der Abbaukante 605 bzw. im Berginneren der Abbaukante 605 etwa vorliegenden Störkörpern, z.B. Findlingen;
- Erfassung der (inneren) Bergstruktur des Materials an der Abbaukante 605, z.B. zur Unterscheidung von im Berg vorliegenden Materialqualitäten sowie zur Unterscheidung von als für die Erzgewinnung nutzbarem Wertmineral und nicht nutzbarem Abraum, zur Ermittlung der genauen Lage von ggf. früheren Untertage- bzw. Bergbauarbeiten, von im Berg angeordneten, dadurch bedingten oder anderweitig verursachten Material-Trennschichten, sowie zur geologischen Analyse im Bereich der Böschung 620.

Die Ansteuerung des Baggers, insbesondere der Vorschub in der genannten Fahrrichtung des Baggers sowie die Schwenkbewegung des Schaufelrads, erfolgt entweder basierend auf einer Regelung, welche auf der Minimierung der Abweichung zwischen den genannten Ist-und Soll-Werten beruht. Alternativ oder zusätzlich kann die Ansteuerung basierend auf einem selbstlernenden KI-Prozess, und zwar auf der Grundlage eines Geräteverhaltens in Korrelation zu einer aktuell vorliegenden, zu bearbeitenden Böschung, erfolgen.

Bei der modellbasierten Simulation wird ein geometrisches Modell der Abbaukante 605 zugrunde gelegt, welches den sensorisch erfassten Ist-Zustand zusätzlich mit geologischen Daten anreichert. So wird mittels des Radarsensors 645, zusätzlich zur genannten geometrischen Erfassung des Böschungsverhaltens 620 bzw. der Abbaukante 605, auch die räumliche Lage einer in dem vorliegenden Szenario exemplarisch vorliegenden, im Inneren der Abbaukante 605 eingeschlossenen Flözstrecke bzw. -struktur 625 sensorisch erfasst. Die Flözstrecke 625 kann noch aus früheren Untertage- bzw. Grubenbauarbeiten stammen und somit nur als nicht verwertbarer (reiner) Abraum dienen. Demgegenüber kann die Flözstrecke 625 auch einem genannten, sensorisch aufzufindenden Wertmineral entsprechen, um entsprechend sorgfältig abgebaut zu werden. Das Modell umfasst in dem vorliegenden Szenario zudem einen in der oberen Abbauschicht 610 entweder noch nicht oder bereits leicht freigelegten Findling 630.

Als Ergebnis der Simulation ergibt sich ein detaillierter Abbauplan zum Betrieb des Baggers 635. Dabei werden anhand des genannten Vergleichs zwischen den sensorisch erfassten Daten und den modellbasiert berechneten, entsprechenden Daten die folgenden Betriebsparameter des Baggers 635 automatisch eingestellt bzw. nachjustiert:
- Die Positionierung des Schaufelradbaggers in Bezug auf einen Abbaublock;
- die Fahrgeschwindigkeit (Vorschub) des Baggers und die Schwenkgeschwindigkeit des Schaufelrads;
- die Aufteilung von Scheiben (entsprechend einer Strossenhöhe) in einem jeweiligen Abbaublock;
- die Schnitttiefe des Schaufelrads;
- die Bahnplanung des Baggers für den Abbau.

## Patentansprüche

1. Verfahren zum automatisierten Betrieb einer Materialgewinnungsanlage an einer Abbaufront (130) einer Materialgewinnungsstätte, wobei die Materialgewinnungsanlage wenigstens ein mobiles und bewegliches Abbaugerät (100) zum Erzeugen von Schüttgut und wenigstens ein Fördergerät (105) zum Abtransportieren des abgebauten Schüttgutes umfasst,
wobei anhand von mittels einer Sensorik (200, 300 - 315) gewonnenen Sensordaten (203) eine modellbasierte Echtzeit-Simulation des Betriebs der Materialgewinnungsanlage sowie des entsprechenden Abbauprozesses von Material an der Abbaufront (130) der Materialgewinnungsstätte durchgeführt wird und die Materialgewinnungsanlage auf der Grundlage der Ergebnisse der Echtzeit-Simulation automatisiert betrieben wird,
wobei anhand der erfassten Sensordaten (203) für die Automatisierung des Abbauprozesses an der Abbaufront (130) geeignete erste Steuerungsdaten (207) für das wenigstens eine Abbaugerät (100) in Echtzeit erzeugt werden, **dadurch gekennzeichnet, dass** zweite Steuerungsdaten für in der Umgebung der Abbaufront (130) bzw. in der Umgebung des wenigstens einen Abbaugerätes (100) angeordnete, an dem Abbauprozess beteiligte Anlagenteile bzw. Geräte erzeugt werden.

2. Verfahren nach Anspruch 1, **dadurch gekennzeichnet, dass** anhand der erfassten Sensordaten (203) eine Prozessplanung des Abbauprozesses an der Abbaufront (130) durchgeführt wird.

3. Verfahren nach einem der vorhergehenden Ansprüche, **dadurch gekennzeichnet, dass** anhand der erfassten Sensordaten (203) eine Klassifizierung einer vorliegenden Betriebssituation der Materialgewinnungsanlage im Bereich der Abbaufront (130) in eine Situationsklasse durchgeführt wird und dass anhand des Klassifizierungsergebnisses eine möglicherweise bevorstehende, einen Eingriff an der Materialgewinnungsanlage erfordernde Betriebssituation erkannt wird.

4. Verfahren nach Anspruch 3, **dadurch gekennzeichnet, dass** bei der Klassifizierung der Betriebssituation der Materialgewinnungsanlage im Bereich der Abbaufront (130) anhand der erfassten Sensordaten (203) eine oder mehrere aus der Gruppe der folgenden technischen Größen ermittelt wird:
- die geometrische Kontur einer Abbaukante (605) der Abbaufront (130, 600);
- die Festigkeit des abzubauenden Materials, bevorzugt anhand dessen Wassergehalts;
- mögliche Trennschichten in dem abzubauenden Material;
- im Bereich der Abbaukante (605) angeordnete Objekte;
- Positions- und/oder Winkeldaten von an der Abbaufront (130, 600) beteiligten Anlagenteilen bzw. Geräten.

5. Verfahren nach Anspruch 4, **dadurch gekennzeichnet, dass** bei der Klassifizierung der Betriebssituation der Materialgewinnungsanlage im Bereich der Abbaufront (130) zusätzlich eine oder mehrere aus der Gruppe der folgenden zwei sensorisch erfassten technischen Größen berücksichtigt werden:
- das Böschungsverhalten an der Abbaufront (130, 600);
- unterschiedliche Materialien an der Abbaufront (130, 600).

6. Verfahren nach einem der vorhergehenden Ansprüche, **dadurch gekennzeichnet, dass** die sensorisch erfassten und ggf. klassifizierten Sensordaten (203) in Echtzeit verarbeitet werden, um die Einstellung wenigstens eines oder mehrerer aus der Gruppe der folgenden Betriebsparameter der Materialgewinnungsanlage automatisch vorzunehmen:
- das Positionieren des wenigstens einen Abbaugerätes (100) in Bezug auf die Abbaufront (130, 600);
- das Positionieren des wenigstens einen Abbaugerätes (100) in Bezug auf wenigstens ein mit dem Abbaugerät (100) prozesstechnisch zusammen arbeitendes Fördergerät;
- das Triggern von Prozesssequenzen;
- das Festlegen von Prozessgeschwindigkeiten;
- das Festlegen der Schnitttiefe eines Schneidwerkzeugs des wenigstens einen Abbaugerätes (100);
- das Verfahren des wenigstens einen Abbaugerätes (100) relativ zur Abbaufront (130, 600).

7. Verfahren nach Anspruch 6, **dadurch gekennzeichnet, dass** die Echtzeit-Verarbeitung der sensorisch erfassten und ggf. klassifizierten Sensordaten (203) mittels eines selbstlernenden, künstlichen neuronalen Netzwerks erfolgt, wobei der Abbauprozess an der Abbaukante (605) anhand eines vorgegebenen Maschinenverhaltens bzw. Geräteverhaltens trainiert wird.

8. Verfahren nach einem der Ansprüche 1 bis 7, **dadurch gekennzeichnet, dass** Steuerungsdaten (207) erzeugt werden, mittels derer dass wenigstens eine Abbaugerät (100) und das wenigstens eine erste Fördergerät (105) kollisionsverhindernd angesteuert werden (210), wobei geeignete Ausweichmanöver und/oder eine Abschaltung wenigstens einer Aktorik eines der beteiligten Abbau-/Fördergeräte (100, 105) und/oder kollisionsverhindernde Fahrbefehle und/oder Schwenk- und Hubbewegungen des wenigstens einen Abbaugerätes (100) sowie des wenigstens einen ersten Fördergerätes (105) durchgeführt werden.

9. Einrichtung, welche eingerichtet ist, eine insbesondere im Tagebau einsetzbare Abbau-/Förderanlage, welche wenigstens ein Abbaugerät (100) zum Erzeugen von Schüttgut und wenigstens ein erstes Fördergerät (105) zum Abtransportieren des abgebauten Schüttgutes umfasst, mittels eines Verfahrens gemäß einem der Ansprüche 1 bis 8 zu steuern.

10. Einrichtung nach Anspruch 9, **gekennzeichnet durch** eine Sensorik (200, 300 - 315) zur Erzeugung von Sensordaten (203), eine Datenverarbeitungseinheit (205) zur Durchführung einer Klassifizierung nach einem der Ansprüche 5 bis 7 und zur Erzeugung von Steuerungsdaten (207), mittels derer dass wenigstens eine Abbaugerät (100) und das wenigstens eine Fördergerät (105) mittels einer Steuereinheit (210) angesteuert werden.

11. Einrichtung nach Anspruch 9 oder 10, **dadurch gekennzeichnet, dass** die Sensorik (200, 300 - 315) einen oder mehrere aus der Gruppe der folgenden Sensoren umfasst:
- Radarantenne und/oder "Ground Penetrating"-Radarsystem;
- optischer oder Laser-basierter Sensor ("LiDar");
- optische Kamera oder IR-Kamera;
- elektromagnetischer Sensor (Transponder);
- GPS-Sensor;
- Winkel-Encoder.

## Claims

1. Method for automated operation of a material extraction plant at a mining face (130) of a material extraction site, wherein the material extraction plant comprises at least one mobile and movable mining device (100) for producing bulk material and at least one conveyor device (105) for transporting away the mined bulk material,
wherein on the basis of sensor data (203) obtained by means of a sensor system (200, 300 - 315), a model-based real-time simulation of the operation of the material extraction plant and of the corresponding process of mining material at the mining face (130) of the material extraction site is performed and the material extraction plant is operated in an automated manner on the basis of the results of the real-time simulation,
wherein, on the basis of the detected sensor data (203), suitable first control data (207) for the automation of the process of mining at the mining face (130) are generated in real time for the at least one mining device (100), **characterised in that** second control data are generated for plant parts or devices which are arranged in the vicinity of the mining face (130) or in the vicinity of the at least one mining device (100) and involved in the mining process.

2. Method according to claim 1, **characterised in that** process planning of the process of mining at the mining face (130) is performed on the basis of the detected sensor data (203).

3. Method according to any one of the preceding claims, **characterised in that** a classification of an existing operating situation of the material extraction plant in the region of the mining face (130) into a situation class is performed on the basis of the detected sensor data (203), and **in that** a possibly imminent operating situation requiring action on the material extraction plant is identified on the basis of the classification result.

4. Method according to claim 3, **characterised in that** in the classification of the operating situation of the material extraction plant in the region of the mining face (130), one or more of the group of the following technical variables is determined on the basis of the detected sensor data (203):
- the geometric contour of a mining edge (605) of the mining face (130, 600);
- the strength of the material to be mined, preferably on the basis of its water content;
- possible separation layers in the material to be mined;
- objects arranged in the region of the mining edge (605);
- position and/or angle data of plant parts or devices involved in the mining face (130, 600).

5. Method according to claim 4, **characterised in that** in the classification of the operating situation of the material extraction plant in the region of the mining face (130), one or more of the following two technical variables detected by sensors are additionally taken into account:
- the slope behaviour on the mining face (130, 600);
- different materials on the mining face (130, 600).

6. Method according to any one of the preceding claims, **characterised in that** the sensor data (203) detected by sensors and optionally classified are processed in real time in order to automatically carry out the adjustment of at least one or more of the group of the following operating parameters of the material extraction plant:
- positioning of the at least one mining device (100) with respect to the mining face (130, 600);
- positioning of the at least one mining device (100) with respect to at least one conveyor device cooperating with the mining device (100) in the process;
- triggering of process sequences;
- setting of process speeds;
- setting of the cutting depth of a cutting tool of the at least one mining device (100);
- moving of the at least one mining device (100) relative to the mining face (130, 600).

7. Method according to claim 6, **characterised in that** the real-time processing of the sensor data (203) detected by sensors and optionally classified is performed by means of a self-learning, artificial neural network, wherein the process of mining at the mining edge (605) is trained on the basis of a specified machine behaviour or device behaviour.

8. Method according to any one of claims 1 to 7, **characterised in that** control data (207) are generated, by means of which the at least one mining device (100) and the at least one first conveying device (105) are controlled (210) in a collision-preventing manner, wherein suitable evasive manoeuvres and/or deactivation of at least one actuator of one of the mining/conveying devices (100, 105) involved and/or collision-preventing travel commands and/or swivel and stroke movements of the at least one mining device (100) and of the at least one first conveying device (105) are performed.

9. Apparatus designed to control a mining/conveying plant which can be used in particular in open-cast mining and which comprises at least one mining device (100) for producing bulk material and at least one first conveying device (105) for transporting away the mined bulk material, by means of a method according to any one of claims 1 to 8.

10. Apparatus according to claim 9, **characterised by** a sensor system (200, 300- 315) for generating sensor data (203), a data processing unit (205) for performing a classification according to any one of claims 5 to 7 and for generating control data (207), by means of which the at least one mining device (100) and the at least one conveying device (105) are controlled by means of a control unit (210).

11. Apparatus according to claim 9 or 10, **characterised in that** the sensor system (200, 300 - 315) comprises one or more of the group of the following sensors:
- radar antenna and/or ground penetrating radar system;
- optical or laser-based sensor (LiDAR);
- optical camera or IR camera;
- electromagnetic sensor (transponder);
- GPS sensor;
- angle encoder.

## Revendications

1. Procédé destiné à l'exploitation automatisée d'une installation d'extraction de matériaux au niveau d'un front de taille (130) d'un site d'extraction de matériaux, dans lequel l'installation d'extraction de matériaux comprend au moins un appareil de taille (100) mobile et déplaçable destiné à générer du matériau en vrac et au moins un convoyeur (105) destiné à emporter le matériau en vrac taillé,
dans lequel à l'aide de données de capteur (203) obtenues au moyen de capteurs (200, 300 - 315), une simulation en temps réel, basée sur un modèle, de l'exploitation de l'installation d'extraction de matériaux ainsi que du processus de taille correspondant de matériaux est réalisée au niveau du front de taille (130) du site d'extraction de matériaux et l'installation d'extraction de matériaux est exploitée de manière automatisée sur la base des résultats de la simulation en temps réel,
dans lequel à l'aide des données de capteur acquises (203) pour l'automatisation du processus de taille au niveau du front de taille (130), des premières données de commande adaptées (207) pour l'au moins un appareil de taille (100) sont générées en temps réel, **caractérisé en ce que** des secondes données de commande pour des parties d'installation ou des appareils, impliqués dans le processus de taille, disposés dans l'environnement du front de taille (130) ou dans l'environnement de l'au moins un appareil de taille (100) sont générées.

2. Procédé selon la revendication 1, **caractérisé en ce que**, à l'aide des données de capteur acquises (203), une planification de processus du processus de taille est réalisée au niveau du front de taille (130).

3. Procédé selon l'une quelconque des revendications précédentes, **caractérisé en ce que**, à l'aide des données de capteur acquises (203), une catégorisation d'une situation d'exploitation actuelle de l'installation d'extraction de matériaux est réalisée dans la zone du front de taille (130) dans une catégorie de situation et **en ce que**, à l'aide du résultat de catégorisation, une situation d'exploitation potentiellement imminente nécessitant une intervention au niveau de l'installation d'extraction de matériaux est décelée.

4. Procédé selon la revendication 3, **caractérisé en ce que** lors de la catégorisation de la situation d'exploitation de l'installation d'extraction de matériaux dans la zone du front de taille (130), une ou plusieurs grandeurs issues du groupe des grandeurs techniques suivantes sont déterminées à l'aide des données de capteur acquises (203) :
- le contour géométrique d'un bord de taille (605) du front de taille (130, 600) ;
- la solidité du matériau à tailler, de préférence à l'aide de la teneur en eau de celui-ci ;
- d'éventuelles couches de séparation dans le matériau à tailler ;
- des objets disposés dans la zone du bord de taille (605) ;
des données de position et/ou d'angle de parties d'installation ou d'appareils impliqués au niveau du front de taille (130, 600).

5. Procédé selon la revendication 4, **caractérisé en ce que** lors de la catégorisation de la situation d'exploitation de l'installation d'extraction de matériaux dans la zone du front de taille (130) une ou plusieurs grandeurs techniques issues du groupe des deux grandeurs techniques suivantes acquises par capteur sont prises en compte :
- le comportement de remblai au niveau du front de taille (130, 600) ;
- divers matériaux au niveau du front de taille (130, 600).

6. Procédé selon l'une quelconque des revendications précédentes, **caractérisé en ce que** les données de capteur (203) acquises par capteur et le cas échéant catégorisées sont traitées en temps réel pour effectuer automatiquement le réglage d'au moins un paramètre d'exploitation issu du groupe des paramètres d'exploitation suivants de l'installation d'extraction de matériaux :
- le positionnement de l'au moins un appareil de taille (100) par rapport au front de taille (130, 600) ;
- le positionnement de l'au moins un appareil de taille (100) par rapport à au moins un convoyeur travaillant selon le processus conjointement avec l'appareil de taille (100) ;
- le déclenchement de séquences de processus ;
- l'établissement de vitesses de processus ;
- l'établissement de la profondeur de coupe d'un outil de découpe de l'au moins un appareil de taille (100) ;
- le procédé de l'au moins un appareil de taille (100) par rapport au front de taille (130, 600).

7. Procédé selon la revendication 6, **caractérisé en ce que** le traitement en temps réel des données de capteur (203) acquises par capteur et le cas échéant catégorisées est effectué au moyen d'un réseau neuronal artificiel d'apprentissage automatique, dans lequel le processus de taille est entraîné au niveau du bord de taille (605) à l'aide d'un comportement de machine ou d'un comportement d'appareil prédéfini.

8. Procédé selon l'une quelconque des revendications 1 à 7, **caractérisé en ce que** des données de commande (207) sont générées, au moyen desquelles l'au moins un appareil de taille (100) et l'au moins un premier convoyeur (105) sont commandés (210) de manière à empêcher une collision, dans lequel une manoeuvre d'évitement appropriée et/ou un arrêt d'au moins un actionneur d'un des appareils de coupe/convoyeurs (100, 105) impliqués et/ou des ordres de déplacement et/ou des mouvements de pivotement et de levage empêchant des collisions de l'au moins un appareil d'extraction (100) ainsi que de l'au moins un premier convoyeur (105) sont réalisés.

9. Appareil conçu pour commander au moyen d'un procédé selon l'une quelconque des revendications 1 à 8 une installation de taille/transport pouvant en particulier être mise en oeuvre dans une mine à ciel ouvert, laquelle installation comprend au moins un appareil de coupe (100) destiné à générer du matériau en vrac et au moins un premier convoyeur (105) destiné à emporter le matériau en vrac taillé.

10. Appareil selon la revendication 9, **caractérisé par** des capteurs (200, 300 - 315) destinés à la génération de données de capteur (203), une unité de traitement de données (205) destinée à la réalisation d'une catégorisation selon l'une quelconque des revendications 5 à 7 et à la génération de données de commande (207), au moyen desquelles l'au moins un appareil de taille (100) et l'au moins un convoyeur (105) sont commandés au moyen d'une unité de commande (210).

11. Appareil selon la revendication 9 ou 10, **caractérisé en ce que** les capteurs (200, 300
- 315) comprennent un ou plusieurs capteurs issus du groupe des capteurs suivants :
- une antenne radar et/ou un système de radar à pénétration de sol ;
- un capteur optique ou laser ("LiDar") ;
- une caméra optique ou une caméra infrarouge ;
- un capteur électromagnétique (transpondeur) ;
- un capteur GPS ;
- un codeur d'angles.
